# EUROPEAN PATENT APPLICATION

(11) **EP 4 737 108 A1**
(43) Date of publication of application: **06.05.2026**
(21) Application number: 25198050.4
(22) Date of filing: 26.08.2025
(51) Int. Cl.: B30B 11/08, B30B 15/30

(54) **COMPRESSION MOLDING MACHINE**

(30) Priority: 01.11.2024 JP 2024192623
(71) Applicant: Kikusui Seisakusho Ltd., Nakagyo-ku Kyoto-shi Kyoto 604-8483 (JP)
(72) Inventor: FUSHIMI, Shinsuke, Nakagyo-ku, Kyoto-shi, Kyoto 604-8483 (JP)
(74) Representative: TBK

(57) **Abstract**

A compression molding machine (A) includes a turret (3) including a die table (31) having die bores (4) penetrating the die table (31), an upper punch (5) and a lower punch (6) slidably retained above and below each of the die bores (4), the compression molding machine (A) being of a rotary type configured to horizontally rotate the turret (3), fill the die bore (4) passing below a feeder with a powdery material containing a lubricant from the feeder, and compression mold the powdery material filled in the die bore (4) when the upper punch (5) and the lower punch (6) being paired pass between an upper roll (14) and a lower roll (15) to produce a molded product. The feeder includes an agitating rotor configured to agitate the powdery material therein, and during trial operation of producing molded products at reduced rotational speed of the turret (3) in comparison to normal operation for mass production of molded products, the compression molding machine (A) measures load torque of a motor configured to drive to rotate the agitating rotor in the feeder or current flowing in a coil of the motor, and controls to reduce rotational speed of the agitating rotor in the feeder if the load torque or the current is large beyond a predetermined value.

## Description

### Field of the Invention

The invention relates to a compression molding machine configured to compress a powdery material and mold a tablet of a pharmaceutical product, a food product, an electronic component, or the like.

### Background of the Invention

There has been known a rotary compression molding machine including a turret including a die table having an outer circumferential portion including a large number of die bores, and an upper punch and a lower punch slidably retained above and below each of the die bores, and configured to horizontally rotate the die bores and the punches together and fill each of the die bores with a powdery material when the die bore passes just below a powdery material filling device to compression mold or tablet the powdery material in the die bore when the paired upper and lower punches pass between an upper roll and a lower roll.

The filling device mounted in the rotary compression molding machine is typically configured as an agitated feeder incorporating a rotatable agitating rotor and configured to inject a powdery material into a die bore while agitating the powdery material. The feeder of the compression molding machine is fed with a powdery material from a powdery material mixing and feeding device. A powdery material feeding device mixes a plurality of powdery materials (a principal agent (main ingredient), an excipient, a lubricant, and the like for production of a pharmaceutical tablet) and then deliver the mixed powdery materials toward the feeder (see JP 2021 000647 A or the like).

A method of adding a lubricant to powdery materials obtained by mixing a principal agent, an excipient, and the like to feed a compression molding machine with the powdery materials, and compression molding the mixed powdery materials in the molding machine to obtain a molded product is called an "internal lubrication method". This processing is to prevent part of the mixed powdery materials from adhering to an inner circumferential surface of a die bore or a tip end surface of a punch of the molding machine and obtaining a partially missing molded product.

Specific examples of the lubricant include magnesium stearate and talc. These lubricants have expansibility. It is thus unpreferred to add a lubricant to a powdery material as a raw material for molded products, mix together, and then continuously agitate the mixed powdery materials. The lubricant is kneaded in a way to expand and coat powdery material particles of the principal agent, the excipient, and the like to possibly disturb compression moldability of the powdery materials in the molding machine and deteriorate elution properties of the principal agent in the completed molded product, that is, affect quality of the molded product.

During normal operation for mass production of molded products with use of the compression molding machine, the turret of the molding machine rotates at high speed and the feeder quickly fills the die bores in the die table with mixed powdery materials a large amount of which are thus consumed. This also increases a flow rate of powdery materials fed from the powdery material mixing and feeding device to the feeder of the molding machine. Accordingly, the powdery materials are less likely to stay in the feeder and the powdery material mixing and feeding device, and the powdery materials containing an internal lubricant are agitated and mixed at a degree that does not increase excessively.

On an actual production site for molded products, trial operation of the compression molding machine is executed prior to actual normal operation for mass production of molded products. Trial operation is important for optimization of tableting conditions for mass production of molded products (rotational speed of the turret in the molding machine, an amount of the powdery material to be filled in each die bore (a position of the lower punch in the die bore (height of a bottom of the die bore)), pressure to compress the powdery material (positions of the upper and lower rolls configured to press the punches), rotational speed of the agitating rotor incorporated in the feeder, and the like). Parameters of the conditions differ for each type of molded products to be produced, and are finely adjusted also depending on properties of the powdery material, temperature, humidity, and the like. Trial operation is executed again also after replacement of any of members such as molds like dies or punches and a rail configured to guide the punches.

The rotational speed of the turret in the compression molding machine is intentionally reduced during trial operation in comparison to normal operation. This is also for reducing as much as possible the amount of the powdery material consumed during trial operation. The amount of the powdery material filled in the die bores of the die table from the feeder is thus reduced per unit time, so that the powdery material stays in the feeder and subsequently stays in the powdery material mixing and feeding device.

Regardless of this, the agitating rotor in the agitated feeder or the agitating rotor in the powdery material mixing and feeding device keep rotating, to increase the number of agitation of the powdery material staying for a long period and excessively mix to expand the added internal lubricant, which can cause failures in accurately finding quality of molded products produced during trial operation and thus appropriately setting tableting conditions for actual mass production of molded products.

### Summary of the Invention

The invention has been achieved by newly focusing on the above problems, and it is an object of the invention to inhibit excessive mixture of an internal lubricant during trial operation of a rotary compression molding machine.

The invention provides a compression molding machine including a turret including a die table having die bores penetrating the die table, an upper punch and a lower punch slidably retained above and below each of the die bores, the compression molding machine being of a rotary type configured to horizontally rotate the turret, fill the die bore passing below a feeder with a powdery material containing a lubricant from the feeder, and compression mold the powdery material filled in the die bore when the upper punch and the lower punch being paired pass between an upper roll and a lower roll to produce a molded product, in which the feeder includes an agitating rotor configured to agitate the powdery material therein, and during trial operation of producing molded products at reduced rotational speed of the turret in comparison to normal operation for mass production of molded products, the compression molding machine measures load torque of a motor configured to drive to rotate the agitating rotor in the feeder or current flowing in a coil of the motor, and controls to reduce rotational speed of the agitating rotor in the feeder if the load torque or the current is large beyond a predetermined value. This configuration can inhibit excessive agitation and mixture of a powdery material staying in the agitated feeder during trial operation of the compression molding machine.

The invention further provides a compression molding machine including a turret including a die table having die bores penetrating the die table, an upper punch and a lower punch slidably retained above and below each of the die bores, the compression molding machine being of a rotary type configured to horizontally rotate the turret, fill the die bore passing below a feeder with a powdery material containing a lubricant from the feeder, and compression mold the powdery material filled in the die bore when the upper punch and the lower punch being paired pass between an upper roll and a lower roll to produce a molded product, in which the compression molding machine is accompanied by a powdery material mixing and feeding device including an agitating rotor configured to agitate the powdery material mixed with the lubricant and simultaneously feeding the feeder with the powdery material thus mixed, and during trial operation of producing molded products at reduced rotational speed of the turret in comparison to normal operation for mass production of molded products, the compression molding machine measures load torque of a motor configured to drive to rotate the agitating rotor of the powdery material mixing and feeding device or current flowing in a coil of the motor, and controls to reduce rotational speed of the agitating rotor of the powdery material mixing and feeding device if the load torque or the current is large beyond a predetermined value. This configuration can inhibit excessive agitation and mixture of a powdery material staying in the powdery material mixing and feeding device during trial operation of the compression molding machine.

The invention still further provides a compression molding machine including a turret including a die table having die bores penetrating the die table, an upper punch and a lower punch slidably retained above and below each of the die bores, the compression molding machine being of a rotary type configured to horizontally rotate the turret, fill the die bore passing below a feeder with a powdery material containing a lubricant from the feeder, and compression mold the powdery material filled in the die bore when the upper punch and the lower punch being paired pass between an upper roll and a lower roll to produce a molded product, in which the compression molding machine is accompanied by a powdery material mixing and feeding device including an agitating rotor configured to agitate the powdery material mixed with the lubricant and simultaneously feeding the feeder with the powdery material thus mixed, the feeder includes an agitating rotor configured to agitate the powdery material therein, and during trial operation of producing molded products at reduced rotational speed of the turret in comparison to normal operation for mass production of molded products, the compression molding machine measures load torque of a motor configured to drive to rotate the agitating rotor of the powdery material mixing and feeding device or current flowing in a coil of the motor, and controls to reduce rotational speed of the agitating rotor in the feeder if the load torque or the current is large beyond a predetermined value. This configuration can inhibit excessive agitation and mixture of a powdery material staying in the agitated feeder during trial operation of the compression molding machine.

The invention also provides a compression molding machine including a turret including a die table having die bores penetrating the die table, an upper punch and a lower punch slidably retained above and below each of the die bores, the compression molding machine being of a rotary type configured to horizontally rotate the turret, fill the die bore passing below a feeder with a powdery material containing a lubricant from the feeder, and compression mold the powdery material filled in the die bore when the upper punch and the lower punch being paired pass between an upper roll and a lower roll to produce a molded product, in which the compression molding machine is accompanied by a powdery material mixing and feeding device including an agitating rotor configured to agitate the powdery material mixed with the lubricant and simultaneously feeding the feeder with the powdery material thus mixed, the feeder includes an agitating rotor configured to agitate the powdery material therein, and during trial operation of producing molded products at reduced rotational speed of the turret in comparison to normal operation for mass production of molded products, the compression molding machine measures load torque of a motor configured to drive to rotate the agitating rotor in the feeder or current flowing in a coil of the motor, and controls to reduce rotational speed of the agitating rotor of the powdery material mixing and feeding device if the load torque or the current is large beyond a predetermined value. This configuration can inhibit excessive agitation and mixture of a powdery material staying in the powdery material mixing and feeding device during trial operation of the compression molding machine.

A powdery material is an aggregate of minute solids and conceptually includes an aggregate of particles such as so-called granules and an aggregate of powder smaller than such particles. A mixture of a plurality of powdery materials also corresponds to powdery materials. When a molded product is a pharmaceutical tablet, its raw materials such as a principal agent, an excipient, and a lubricant are powdery materials, and the principal agent mixed with the excipient, the lubricant, and the like also corresponds to powdery materials.

### Effects of the Invention

The invention can inhibit excessive mixture of an internal lubricant during trial operation of a rotary compression molding machine to optimize quality of a molded product produced during the trial operation.

### Brief description of the drawings

Fig. 1 is a side sectional view of a rotary compression molding machine according to an embodiment of the invention;
Fig. 2 is a top view of a turret of the compression molding machine according to the embodiment;
Fig. 3 is a developed view showing a flow of a process of molding a molded product by the compression molding machine according to the embodiment and vertical shifts of punches along with rotation of the turret;
Fig. 4 is a configuration diagram of the punches, compression rolls, and a load cell included in the compression molding machine;
Fig. 5 is a side sectional view of a feeder mounted in the compression molding machine according to the embodiment;
Fig. 6 is a perspective view from below, of the feeder;
Fig. 7 is a perspective view from below, of a modified feeder mounted in the compression molding machine according to the embodiment;
Fig. 8 is a side view of a powdery material mixing and feeding device accompanying the compression molding machine according to the embodiment;
Fig. 9 is a perspective view of a screw (agitation shaft) and agitating rotors of a horizontal mixer included in the powdery material mixing and feeding device according to the embodiment;
Fig. 10 is a block diagram of a control system of the compression molding machine according to the embodiment; and
Fig. 11 is a flowchart showing processing executed in accordance with a program by a controller of the compression molding machine according to the embodiment.

### Description of the preferred embodiments

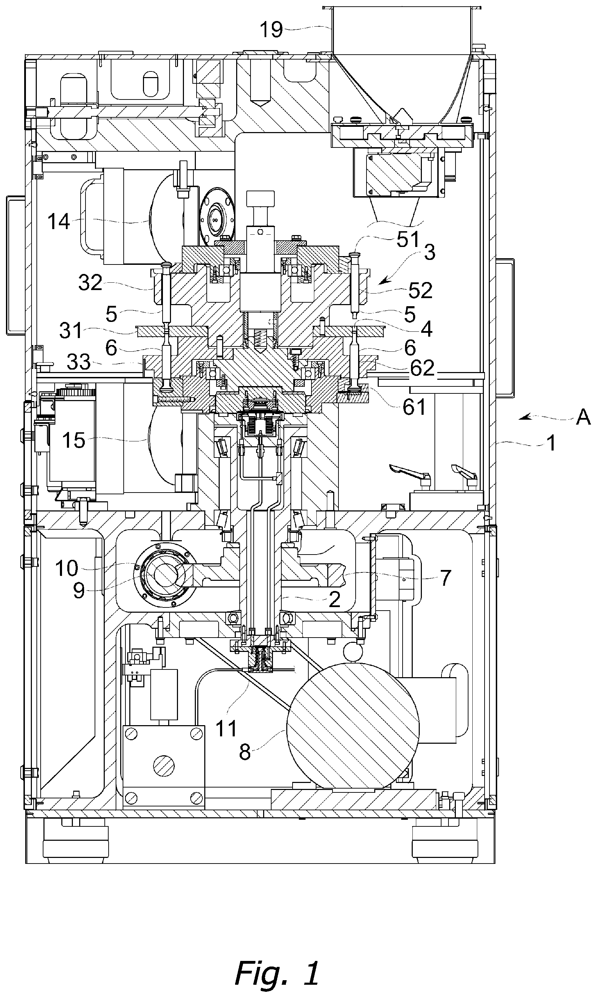

An embodiment of the invention will now be described with reference to the drawings. Initially described is an overview of an entire rotary compression molding machine (hereinafter, referred to as "molding machine") A according to the embodiment, which is applied to production of molded products. As shown in Fig. 1, the molding machine A includes a frame 1 accommodating an upright shaft 2 functioning as a rotary shaft and a turret 3 attached to the top of the upright shaft 2.

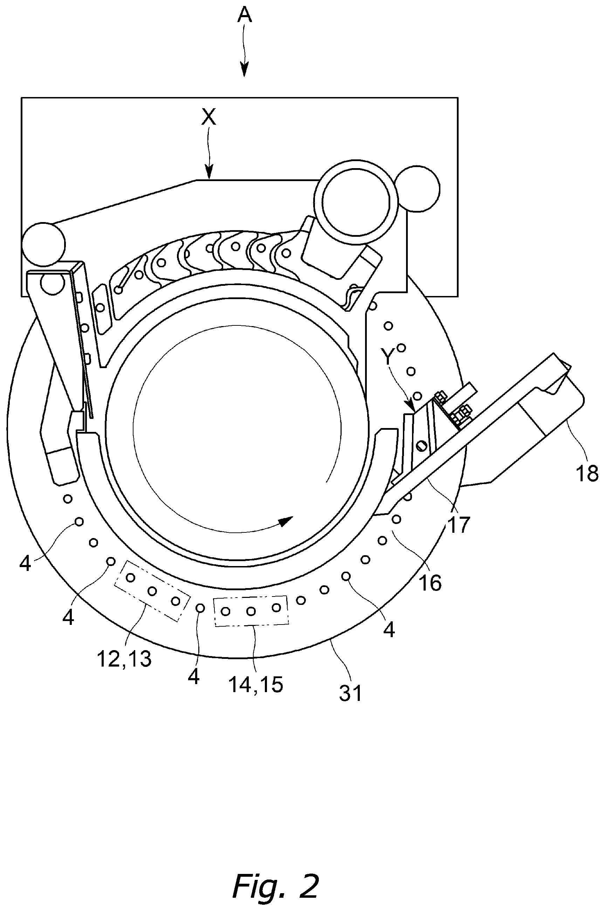

The turret 3 horizontally rotates about the upright shaft 2, more specifically, spins. The turret 3 includes a die table (die disc) 31, an upper punch retaining portion 32, and a lower punch retaining portion 33. As shown in Fig. 2, the die table 31 has a substantially circular disc shape, and has a plurality of die bores 4 that are disposed in an outer circumferential portion and are aligned in a rotation direction at predetermined intervals. Each of the die bores 4 vertically penetrates the die table 31. The die table 31 may alternatively be divided into a plurality of plates. Instead of the die bores 4 formed by directly drilling the die table 31, the die table 31 may alternatively have a plurality of die members that are separate from the die table 31 and are detachably attached to the die table 31. In this case, each of the die members has a die bore penetrating vertically.

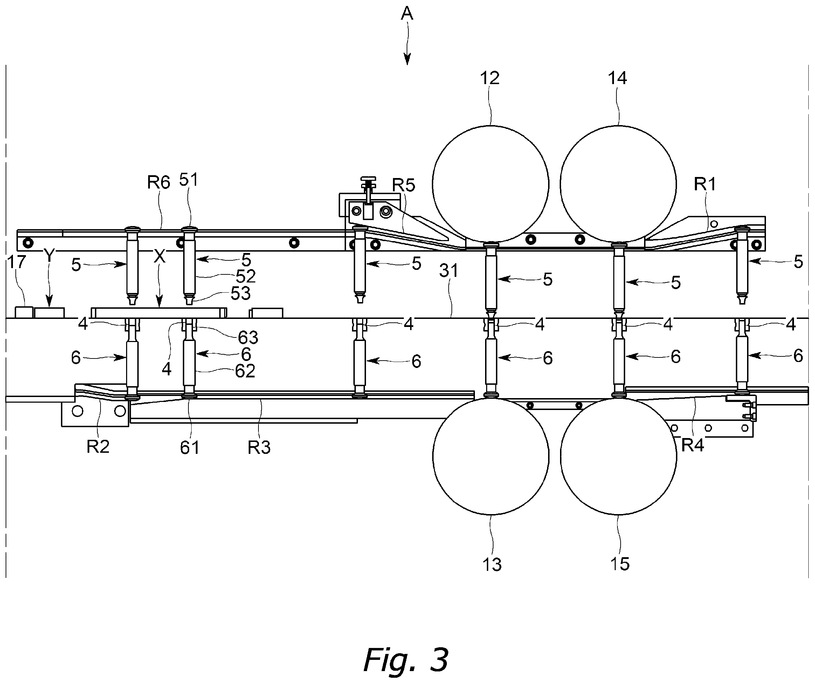

As shown in Figs. 1 and 3, the die bores 4 each have an upper punch 5 and a lower punch 6 disposed above and below the die bore 4. The upper punch 5 and the lower punch 6 are retained by the upper punch retaining portion 32 and the lower punch retaining portion 33 so as to be independently slidable vertically with respect to corresponding one of the die bores 4. The upper punch 5 has a tip 53 that enters and exits corresponding one of the die bores 4. The lower punch 6 has a tip 63 that is kept inserted in corresponding one of the die bores 4. The upper punch 5 and the lower punch 6 horizontally rotate, more specifically revolve, about the upright shaft 2 along with the turret 3 and corresponding one of the die bores 4.

The upright shaft 2 has a lower end to which a worm wheel 7 is attached. The worm wheel 7 meshes with a worm gear 10. The worm gear 10 is fixed to a gear shaft 9 that is driven by a motor 8. Drive power output from the motor 8 is transmitted to the gear shaft 9 through a belt 11 so as to drive to rotate the turret 3 and the punches 5 and 6 that are coupled to the upright shaft 2 by way of the worm gear 10 and the worm wheel 7.

A powdery material as a material for a compression molded product like a pharmaceutical tablet is fed from a powdery material mixing and feeding device Z to be described later, to a hopper or a buffer tank 19, and is fed from the hopper or the buffer tank 19 to a feeder X. The powdery material is filled into the die bores 4 of the die table 31 from the feeder X. The feeder X is positioned on the outer circumferential portion of the rotating die table 31, particularly, just above a revolution orbit of the die bores 4. The die table 31 rotating along with the turret 3 causes the die bores 4 to be displaced relatively to the feeder X.

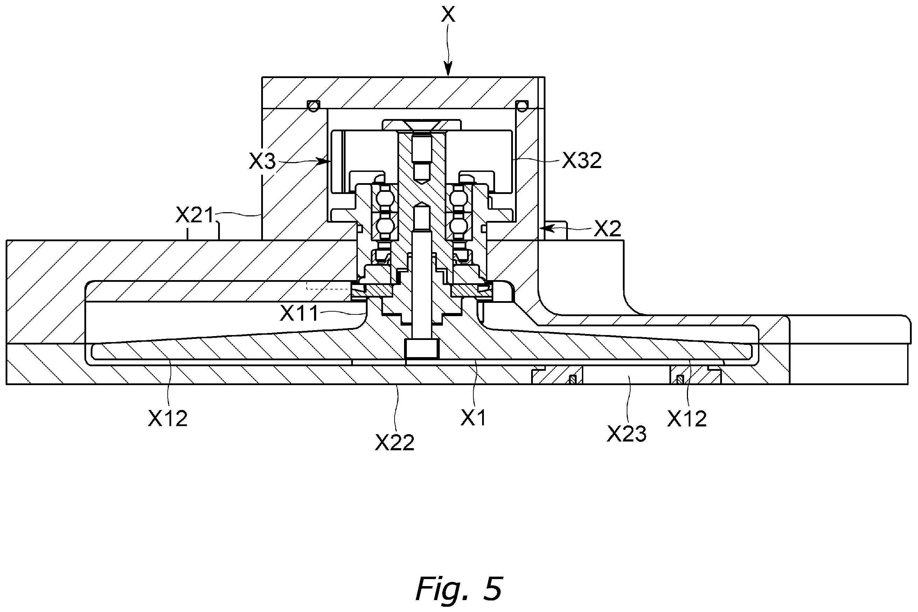

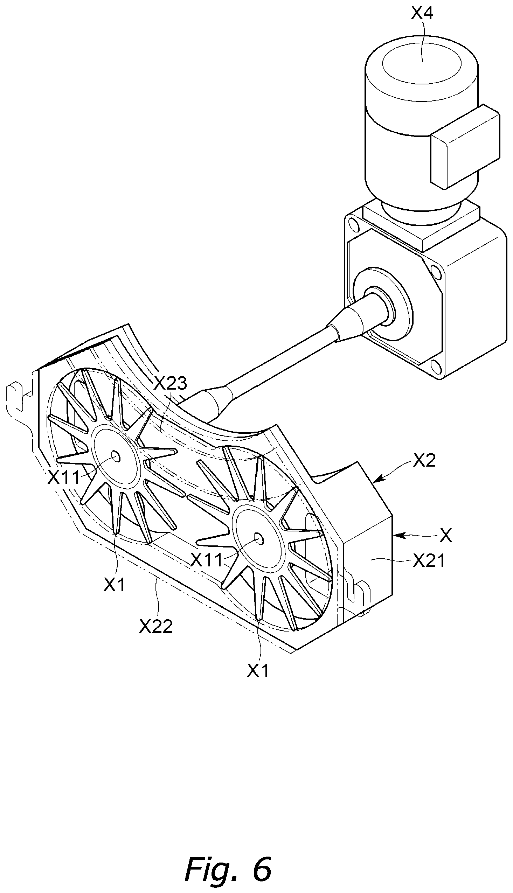

The feeder X according to the embodiment is an agitated feeder configured to drop, into the die bores 4, a powdery material being agitated by rotating an incorporated agitating rotor X1. As shown in Figs. 5 and 6, the feeder X includes, as principal constituent elements, a housing X2 configured to receive a powdery material fed from the powdery material mixing and feeding device Z, a single or a plurality of agitating rotors X1 configured to rotate in the housing X2 to agitate the powdery material as well as drop the powdery material from the housing X2 into the die bores 4 of the die table 31, at least one motor X4 configured to output drive power to rotate the agitating rotors X1, and a transmission mechanism X3 configured to transmit rotation of an output shaft of the motor X4 to shafts of the agitating rotors X1.

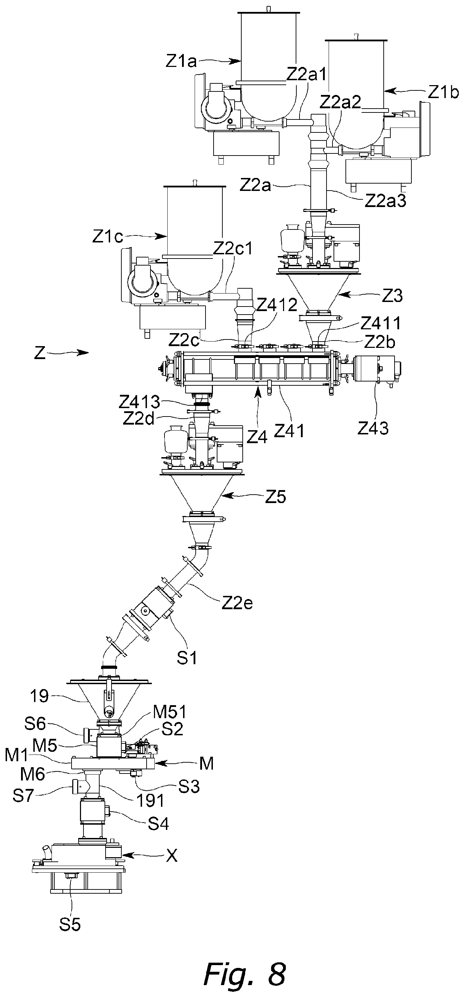

The housing X2 is obtained by fixing a bottom plate member X22 at a lower end of a housing body X21 to have a flat box shape containing an internal space. The housing body X21 has an upper surface including a powdery material supply port configured to guide a powdery material into the housing X2. The powdery material supply port is connected to the powdery material mixing and feeding device Z. More specifically, as shown in Fig. 8, the powdery material supply port of the housing X2 is coupled to a powdery material feed pipe 191 connected to a discharger M6 of a powdery material mixing degree measurement device M included in the powdery material mixing and feeding device Z so as to feed a powdery material from the powdery material mixing degree measurement device M to the feeder X through the powdery material feed pipe 191.

The bottom plate member X22 has a flat dish shape mostly closing from below the internal space of the housing body X21. The bottom plate member X22 includes a groove X23 having a substantially arc shape in a planar view and penetrating the bottom plate member X22. The groove X23 functions as a drop port configured to drop a powdery material to be filled in the die bores 4 of the die table 31 in the molding machine A from inside the housing X2 toward the die bores 4, and is overlapped in a planar view with a passage through which the die bores 4 pass when the feeder X is attached to a predetermined mounting position in the molding machine A.

Each of the agitating rotors X1 is a member including a hub X11 functioning as a central shaft and a plurality of wings X12 extending radially from the hub X11 in a planar view, is accommodated in the internal space of the housing X2, and agitates with use of the wings X12 a powdery material in the housing X2. The feeder X according to the embodiment includes a pair of agitating rotors X1, each of which horizontally rotates about a vertical axis with the hub X11 as a center of rotation.

The transmission mechanism X3 is a gearbox including a plurality of gears meshing with each other. The output shaft of the motor X4 is fixed to a single gear X31, as well as the hub X11 as the shaft of first one of the agitating rotors X1 is fixed to the gear X31 and the hub X11 as the shaft of second one of the agitating rotors X1 is fixed to any other gear X32, to transmit drive power output from the single motor X4 to both the agitating rotors X1. The transmission mechanism X3 includes a gear train positioned at a height just above the agitating rotors X1 in the housing X2. The motor X4 is disposed above the housing X2, and the output shaft extending downward penetrates a shaft hole drilled in the upper surface of the housing X2 and enters the housing X2 to be connected to the gear X31.

Examples of the motor X4 include a servo motor configured to appropriately control rotational speed thereof, and a controller 0 is configured to acquire magnitude of load torque currently applied to the motor X4 and magnitude of applied current. Each of the agitating rotors X1 has rotational speed determined in accordance with the rotational speed of the motor X4 and a change gear ratio of the gear train included in the transmission mechanism X3. The rotational speed of each of the agitating rotors X1 is generally not less than 100 rpm. Adjusting the number of teeth of each of the gears in the gear train included in the transmission mechanism X3 enables an appropriate change of a ratio between the rotational speed of the first one of the agitating rotors X1 and the rotational speed of the second one of the agitating rotors X1.

Adjusting the number of gears interposed between the motor X4 and each of the agitating rotors X1 also enables an appropriate change of a rotation direction of each of the agitating rotors X1. Specifically, the first one of the agitating rotors X1 can rotate in a direction opposite to a rotation direction of the second one of the agitating rotors X1, or both the agitating rotors X1 can rotate in an identical direction.

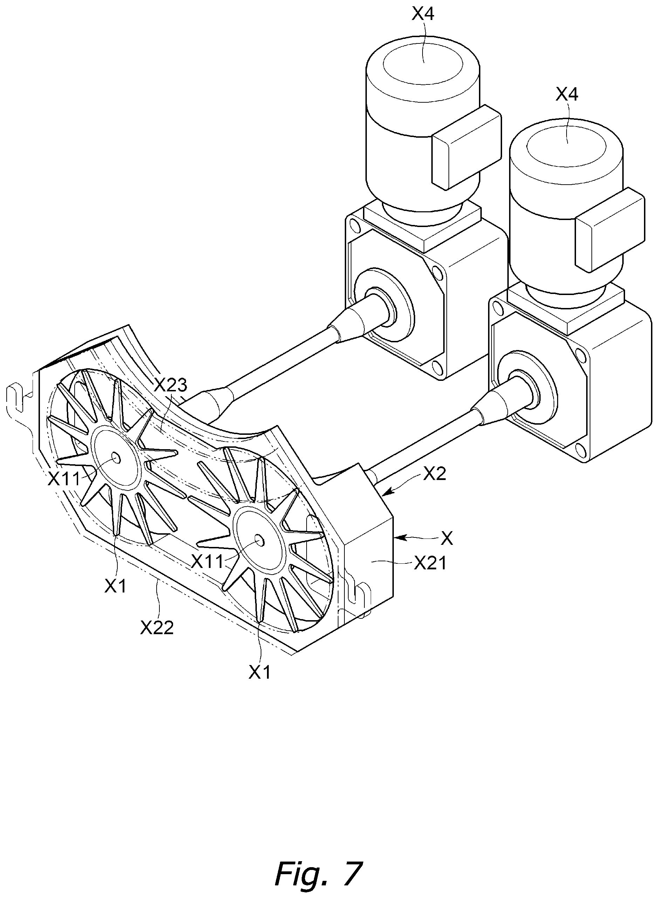

The number of the motor X4 configured to drive to rotate the agitating rotors X1 is not limited to be less than the number of the agitating rotors X1. There may be disposed motors X4 identical in the number of the agitating rotors X1. As shown in Fig. 7, there may be prepared motors X4 identical in the number to the plurality of agitating rotors X1 and output shafts of the motors X4 may be connected respectively to the hubs X11 as shafts of the agitating rotors X1 so that the motors X4 individually drive to rotate the agitating rotors X1. Such a configuration achieves individual changes in rotational speed and rotation direction of the agitating rotors X1 through control of rotational speeds and rotation directions of the motors X4. The number of the agitating rotors X1 is not limited to two and can be three or more.

As shown in Figs. 2 and 3, a preliminary compression upper roll 12, a preliminary compression lower roll 13, a substantial compression upper roll 14, and a substantial compression lower roll 15 are disposed on orbits of the punches 5 and 6 that revolve about the upright shaft 2. The preliminary compression upper roll 12 and the preliminary compression lower roll 13 are paired to vertically sandwich the punches 5 and 6, and the substantial compression upper roll 14 and the substantial compression lower roll 15 are paired to vertically sandwich the punches 5 and 6. The preliminary compression upper roll 12 and the preliminary compression lower roll 13 as well as the substantial compression upper roll 14 and the substantial compression lower roll 15 bias the upper and lower punches 5 and 6 to bring the upper and lower punches 5 and 6 closer to each other, so that tip end surfaces of the tips 53 and 63 compress from above and below a powdery material filled in the die bores 4.

The upper and lower punches 5 and 6 have heads 51 and 61 pressed by the rolls 12, 13, 14, and 15, and trunks 52 and 62 smaller in diameter than the heads 51 and 61. The upper punch retaining portion 32 of the turret 3 vertically slidably retains the trunks 52 of the upper punches 5, whereas the lower punch retaining portion 33 vertically slidably retains the trunks 62 of the lower punches 6. The tips 53 and 63 of the trunks 52 and 62 are thinner than the remaining portions and have diameters substantially equal to an inner diameter of the die bores 4 so as to be inserted into the die bores 4. The punches 5 and 6 revolve to cause the rolls 12, 13, 14, and 15 to come closer to the heads 51 and 61 of the punches 5 and 6. The rolls 12, 13, 14, and 15 come into contact with the heads 51 and 61 to step thereonto. The rolls 12, 13, 14, and 15 further press the upper punches 5 downward and press the lower punches 6 upward. While the rolls 12, 13, 14, and 15 are in contact with flat surfaces of the punches 5 and 6, the punches 5 and 6 keep applying constant pressure to a powdery material in the corresponding die bores 4.

There is a collecting position for completed molded products, in a downstream portion ahead, in a rotation direction of the turret 3 and the punches 5 and 6, of a position pressed by the substantial compression upper roll 14 and the substantial compression lower roll 15. The collecting position has a damper (or a scraper) 17.

Vertical shifts of the upper and lower punches 5 and 6 are caused by cam rails R1, R2, R3, R4, R5, and R6. The rails R1, R2, R3, R4, R5, and R6 extend in the rotation direction of the turret 3 and the punches 5 and 6, and are engaged with the heads 51 and 61 of the punches 5 and 6 to guide and vertically shift the punches 5 and 6.

As shown in Fig. 3, the head 51 of each of the upper punches 5 has a revolution orbit including the ascending rail (ascending cam) R1 configured to lift the upper punch 5 upward at a position upstream of the guide member 17 and extract the tip 53 from the die bore 4, and the descending rail (descending cam) R5 configured to push the upper punch 5 downward at a position upstream of the rolls 12 and 14 and insert the tip 53 to the die bore 4 to be ready for later compression of a powdery material.

The head 61 of each of the lower punches 6 has a revolution orbit including the push-up rail R4 configured to lift the lower punch 6 upward at a position upstream of the guide member 17 to allow the tip 63 to be substantially as high as an upper surface of the die table 31, the lowering unit R2 configured to pull the lower punch 6 downward at a position upstream of or adjacent to the feeder X to set volume of the die bore 4 above the tip 63 to correspond to quantity of a powdery material as a constituent material for a molded product, and the quantity control rail R3 configured to slightly lift the lower punch 6 upward at a position downstream of the feeder X to finely adjust the quantity of the powdery material to be filled in the die bore 4. The quantity control rail R3 has a latter half shaped to slightly pull the lower punch 6 downward to prevent the powdery material having been adjusted in quantity and filled in the die bore 4 from spilling from the die bore 4 due to centripetal force or the like.

A process of producing a molded product will be described roughly. As shown in Fig. 3, the lower punch 6 initially descends and a spray device Y sprays the lubricant toward the inner circumferential surface of the die bore 4 into which the tip 63 of the lower punch 6 is inserted, the upper end surface of the tip 63 of the lower punch 6, and the lower end surface of the tip 53 of the upper punch 5. The feeder X subsequently fills, with a powdery material, the die bore 4 into which the tip 63 of the lower punch 6 is inserted. The lower punch 6 ascends and the powdery material overflowing the die bore 4 is leveled such that the die bore 4 is filled with required quantity of the powdery material.

The upper punch 5 then descends, and the preliminary compression upper roll 12 and the preliminary compression lower roll 13 press the head 51 of the upper punch 5 and the head 61 of the lower punch 6 such that the tips 53 and 63 of the punches 5 and 6 preliminarily compress the powdery material in the die bore 4. The substantial compression upper roll 14 and the substantial compression lower roll 15 subsequently press the head 51 of the upper punch 5 and the head 61 of the lower punch 6, such that the tips 53 and 63 of the punches 5 and 6 substantially compress the powdery material in the die bore 4.

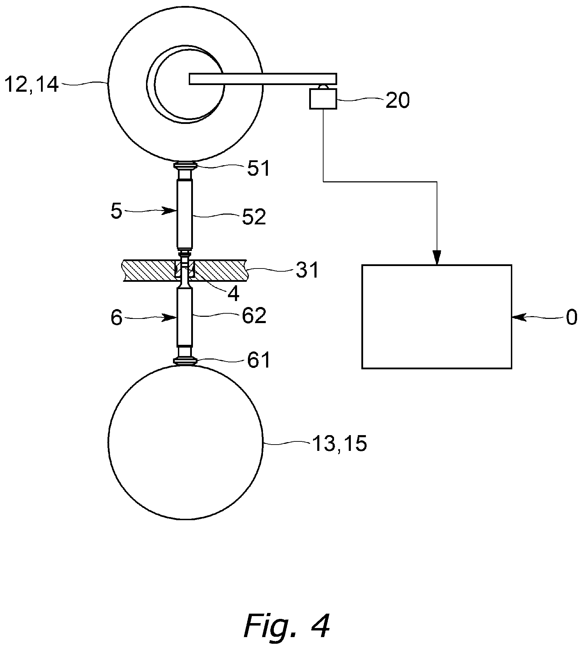

As shown in Fig. 4, the upper rolls 12 and 14 of the molding machine A each have a load cell 20 configured to detect pressure applied to compress the powdery material in the die bore 4 by the rolls 12, 13, 14, and 15 via the punches 5 and 6. The load cell 20 outputs signals that form a pulse signal train having a peak when each of the pairs of punches 5 and 6 compresses the powdery material in corresponding one of the die bores 4 with maximum pressure. Reference to output signals of the load cells 20 enables obtaining magnitude of pressure (preliminary compression pressure) applied to compress the powdery material by the preliminary compression rolls 12 and 13 and magnitude of pressure (substantial compression pressure) applied to compress the powdery material by the substantial compression rolls 14 and 15.

The lower punch 6 eventually ascends until the upper end surface of the tip 63 of the lower punch 6 ascends to be substantially as high as an upper end of the die bore 4, i.e., the upper surface of the die table 31, and pushes the molded product out of the die bore 4 onto the die table 31. The molded product ejected from the die bore 4 is brought into contact with and is scraped by the guide member 17 in a product unloading portion 16 due to rotation of the turret 3, and shifts along the guide member 17 toward a molded product chute 18.

Fig. 8 shows a configuration of the powdery material mixing and feeding device Z according to the embodiment. The powdery material mixing and feeding device Z is configured to mix a plurality of types of powdery materials and then feed the feeder X of the molding machine A with the powdery materials thus mixed. As shown exemplarily in the figure, there are prepared three measuring feeders Z1 (Z1a, Z1b, and Z1c). The first measuring feeder Z1a, the second measuring feeder Z1b, and the third measuring feeder Z1c store different types of powdery materials, and each measure the powdery material at an appropriate target flow rate as well as discharge the powdery material thus measured. When a molded product to be produced is a pharmaceutical tablet, the first measuring feeder Z1a, the second measuring feeder Z1b, and the third measuring feeder Z1c exemplarily feed a principal agent, an excipient such as lactose, and a lubricant such as magnesium stearate or talc, respectively.

The number of measuring feeders Z1 included in the powdery material mixing and feeding device Z changes depending on the number of types of powdery materials to be mixed. The powdery material mixing and feeding device Z can include two, or four or more measuring feeders Z1 with no particular limitation in the number thereof. Alternatively, the plurality of measuring feeders Z1 can measure and feed one type of powdery materials.

The powdery material mixing and feeding device Z includes a vertical mixer Z3 configured to mix powdery materials fed respectively from the first measuring feeder Z1a and the second measuring feeder Z1b, a first connecting pipe Z2a connecting the measuring feeders Z1a and Z1b to the vertical mixer Z3, a second connecting pipe Z2b connecting the vertical mixer Z3 to a horizontal mixer Z4, the horizontal mixer Z4 configured to mix the powdery materials flowing downward from the vertical mixer Z3 and a powdery material fed from the third measuring feeder Z1c, a third connecting pipe Z2c connecting the third measuring feeder Z1c to a halfway position of the horizontal mixer Z4, a vertical mixer Z5 configured to further mix the powdery materials flowing downward from the horizontal mixer Z4, a fourth connecting pipe Z2d connecting the horizontal mixer Z4 to the vertical mixer Z5, and a fifth connecting pipe Z2e connecting the vertical mixer Z5 to the buffer tank 19. The measuring feeders Z1 (Z1a, Z1b, and Z1c) are not limited in terms of shapes, sizes, and disposition to the aspect shown in Fig. 8, and can be modified as necessary.

Each of the first measuring feeder Z1a and the second measuring feeder Z1b measures the principal agent, the excipient, or the like in the form of a powdery material, and simultaneously feeds the first connecting pipe Z2a with the principal agent, the excipient, or the like. The third measuring feeder Z1c measures the lubricant in the form of a powdery material, and simultaneously feeds the third connecting pipe Z2c with the lubricant. These measuring feeders Z1 are configured in accordance with a known loss in weight system (a loss integrated value system) or the like, and each execute feedback control of causing weight of a powdery material discharged from the feeder Z1 to be constantly measured with use of a gravimetric sensor, comparing to find whether the weight transitions to achieve a set target discharge flow rate, and increasing or decreasing a discharge rate of the feeder Z1 to reduce a difference therebetween. Measuring the powdery materials to be fed as the materials for a molded product and feeding the connecting pipes Z2a and Z2c with the powdery materials stabilizes contents of the principal agent and the like in the molded product.

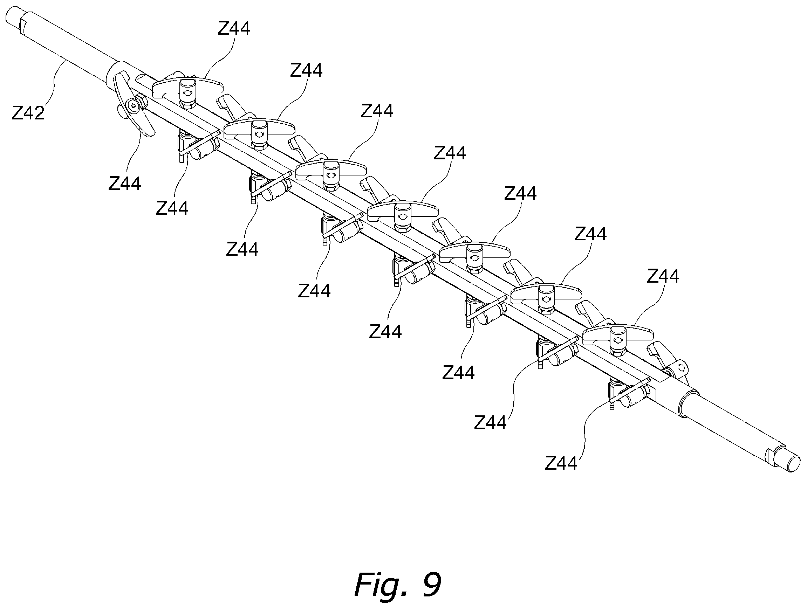

The powdery materials discharged from the measuring feeders Z1a, Z1b, and Z1c are mixed by the mixers Z3, Z4, and Z5. The horizontal mixer Z4 will be described additionally. The horizontal mixer Z4 functions to add a lubricant to powdery materials obtained by previously mixing the principal agent, the excipient, and the like in the vertical mixer Z3 and further mix the powdery materials and the lubricant. The horizontal mixer Z4 includes a cylindrical case Z41 disposed horizontally, substantially horizontally, or inclined at an angle smaller than 45 degrees from the horizontal direction, a screw (agitation shaft) Z42 incorporated in the case Z41, and a motor Z43 configured to drive to rotate the screw Z42. As shown in Fig. 9, agitating rotors Z44 are attached integrally to the screw Z42. The case Z41 basically does not rotate (spin), but there may alternatively be adopted a mechanism configured to rotate the case Z41.

The case Z41 of the horizontal mixer Z4 has a top including a plurality of feed ports Z411 and Z412 from which powdery materials are fed into the case Z41, and a discharge port Z413 from which mixed powdery materials are discharged from the case Z41. Fig. 8 exemplarily shows the feed ports Z411 and Z412 disposed at two points. The second connecting pipe Z2b is connected to the feed port Z411 positioned upstream in the case Z41. The powdery materials obtained by mixing the principal agent and the excipient or the like in the vertical mixer Z3 flow through the second connecting pipe Z2b and are imported into the case Z41 through the feed port Z411. The screw Z42 and the agitating rotors Z44 rotate to move the mixed powdery materials in the case Z41 toward the discharge port Z413.

The third connecting pipe Z2c is connected to the feed port Z412 positioned downstream in the case Z41. The lubricant measured and fed by the third measuring feeder Z1c flows through the third connecting pipe Z2c and is imported into the case Z41 through the feed port Z412. The screw Z42 and the agitating rotors Z44 rotate to mix the lubricant with the mixed powdery materials containing the principal agent, the excipient, and the like and simultaneously move the powdery materials thus mixed in the case Z41 toward the discharge port Z413. As shown in Fig. 8, the third measuring feeder Z1c is preferably connected closest to a downstream end of the horizontal mixer Z4. This will shorten a period for agitating the lubricant discharged from the third measuring feeder Z1c. The lubricant may alternatively be fed to the horizontal mixer Z4 with use of a µR feeder (manufactured by Nisshin Engineering Inc.). The lubricant may still alternatively be fed to the horizontal mixer Z4 by an atomizer (spray device).

Any of the feed ports not in use in the case Z41 is closed by a lid.

The screw Z42 extends in a longitudinal direction of the case Z41 and is disposed substantially in the center in a sectional view. The screw Z42 is driven by the motor Z43 to rotate (spin) about a central shaft. The agitating rotors Z44 can have any shape, but need to be configured to agitate and mix powdery materials in the case Z41 and simultaneously transfer the powdery materials downward toward the discharge port Z413 in an extending direction of the case Z41. As shown in Fig. 9, each of the agitating rotors Z44 is shaped to have expanded both ends, and is attached to the agitation shaft Z42 at a freely adjustable angle.

The discharge port Z413 in the case Z41 is disposed below a most downstream portion of the case Z41. the fourth connecting pipe Z2d is connected to the discharge port Z413. The powdery materials agitated and mixed in the case Z41 are discharged from the discharge port Z413 and move into the fourth connecting pipe Z2d.

The fourth connecting pipe Z2d connects the horizontal mixer Z4 and the vertical mixer Z5. The fourth connecting pipe Z2d is connected to a bottom of the horizontal mixer Z4 and a top of the vertical mixer Z5, and feeds the vertical mixer Z5 with the powdery materials having passed through the discharge port Z413 of the horizontal mixer Z4. The powdery materials thus fed are further agitated in the vertical mixer Z5.

The powdery materials mixed sufficiently are then fed to the buffer tank 19 through the fifth connecting pipe Z2e connected to a discharge port of the vertical mixer Z5.

The buffer tank 19 and the feeder X in the molding machine A interpose the powdery material measurement device M. The powdery material measurement device M includes a case M1, a rotator M2 functioning as a movable member accommodated in the case M1 and configured to capture and transfer mixed powdery materials, a servo motor or stepping motor M3 functioning as a driver for the rotator M2, process analytical technology (PAT) sensors S2 and S3 configured to measure properties, especially, a mixing degree, of the mixed powdery materials, a powdery material remover M4 configured to remove mixed powdery materials having defective properties, an importing port M5 configured to import mixed powdery materials from the buffer tank 19 into the case M1, and the discharger M6 configured to discharge mixed powdery materials toward the agitated feeder X functioning as a filling device in the molding machine A.

The properties, especially, the mixing degree of mixed powdery materials to be fed to the feeder X in the molding machine A is measured promptly by PAT sensors S1, S2, S3, S4, and S5 disposed at sites through which the powdery materials pass. Examples of a method of measuring a mixing degree or any other property of powdery materials include Raman spectroscopy, infrared spectroscopy, X-ray diffraction, X-ray transmission measurement, and high performance liquid chromatography (HPLC). Any one of these methods is applicable if the mixing degree or the like of mixed powdery materials can be measured promptly. The embodiment mainly adopts near infrared reflectance (NIR, or a near infrared absorption spectrum method). Specifically, in order to evaluate an amount or a percentage (ratio) of a principal agent in mixed powdery materials, in other words, uniformity of the mixed powdery materials (whether the mixed powdery materials are segregated), the mixed powdery materials moving from the powdery material mixing and feeding device Z toward the feeder X of the compression molding machine A are irradiated with near infrared light to measure light absorption and/or reflection (scattering) for qualitative and quantitative analyses of a concentration and the like of the principal agent based on a spectrum thereof. These analyses are repeatedly executed at predetermined cycles. A measured wavelength falls in a wavelength range including a unique absorption peak of the principal agent and no peak of the excipient or the lubricant. The near infrared reflectance also achieves measurement of particle diameters of mixed powdery materials.

The embodiment provides the first sensor S1 as a near infrared sensor configured to initially measure properties such as the mixing degree of the mixed powdery materials at a position upstream of the buffer tank 19. The mixed powdery materials having been measured in terms of the properties are temporarily reserved in the buffer tank 19. The powdery materials reserved in the buffer tank 19 are fed to the powdery material measurement device M after the second sensor S2 as a near infrared sensor measures again the properties of the powdery materials. The mixed powdery materials can optionally be further agitated and mixed in the buffer tank 19. The third sensor S3 as a near infrared sensor further measures the properties of the powdery materials in the powdery material measurement device M.

If the mixing degree or any other property of the mixed powdery materials measured by any of the sensors S1, S2, and S3 is out of a predetermined range (e.g., the amount or the percentage (ratio) of the principal agent in the mixed powdery materials departs from the predetermined range), the remover M4 of the powdery material measurement device M removes such defective mixed powdery materials. The mixed powdery materials in a movable portion M21 may alternatively be removed if all measurement values such as mixing degrees of the first, second, and third sensors S1, S2, and S3 are out of the predetermined range, or if the measurement value of any one of the sensors S is out of the predetermined range. The powdery material remover M4 is configured to sample appropriate mixed powdery materials as well as remove defective mixed powdery materials.

Mixed powdery materials not removed by the remover M4 of the powdery material measurement device M are transferred to the normal discharger M6, pass through a discharge bore M13, and flow downward to the powdery material feed pipe 191 to be fed to the feeder X functioning as a filling device in the molding machine A.

The fifth sensor S5 as a near infrared sensor may measure the properties of the mixed powdery materials in the feeder X, or the fourth sensor S4 as a near infrared sensor may measure the properties of the mixed powdery materials immediately before the mixed powdery materials are fed to the feeder X.

The mixed powdery materials fed to the feeder X are filled in the die bore 4 in the die table 31 of the turret 3 in the molding machine A. The mixed powdery materials filled in each of the die bores 4 are compression molded by the upper and lower punches 5 and 6. The mixed powdery materials thus compression molded into a molded product are guided by the guide member 17 to be collected at a molded product collecting position 18. The fourth sensor S4 and/or the fifth sensor S5 promptly and repetitively measures the properties such as the mixing degree of the mixed powdery materials fed to the feeder X and filled into the die bores 4. If any of the measured properties of the powdery materials is out of the predetermined range, a molded product removal mechanism (not shown) included in the molding machine A is configured to remove a defective molded product compression molded in the die bore 4 filled with the powdery materials. Such a defective molded product does not reach the molded product collecting position 18.

The controller 0 is configured to control operation of a system including the molding machine A and the powdery material mixing and feeding device Z. Examples of the controller 0 include a programmable logic controller, as well as a microcomputer system, a personal computer, and a workstation each of which includes a processor, a memory, an auxiliary storage device (e.g., a nonvolatile memory such as a flash memory or a solid state drive (SSD)), an input/output interface, and the like. The controller 0 reads a program preliminarily stored in the auxiliary storage device to the processor via the memory, causes the processor to decode the program, and controls the molding machine A and the powdery material mixing and feeding device Z.

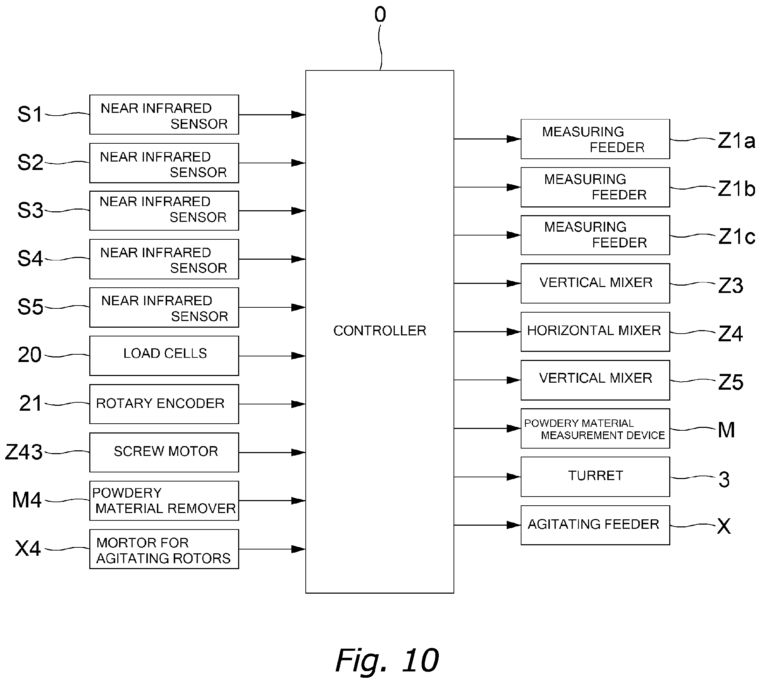

As shown in Fig. 10, the controller 0 of the molding machine A receives a signal output from a rotary encoder 21 configured to detect rotational speed of the turret 3 and the punches 5 and 6 during operation of the molding machine A, and signals output from the load cells 20 configured to detect magnitude of pressure to compress a powdery material with use of the rolls 12, 13, 14, and 15 via the punches 5 and 6 during operation of the molding machine A, controls rotational speed of the motor 8 of the molding machine A, and adjusts the rotational speed of the turret 3 and the punches 5 and 6.

The controller 0 constantly monitors magnitude of load torque applied to the motor X4 configured to drive the agitating rotors X1 configured to agitate a powdery material in the agitated feeder X mounted in the molding machine A. The load torque applied to the motor X4 may be measured by a torque sensor (torque meter) attached to the motor X4, or may be estimated from magnitude of current applied to the motor X4 in order to adjust rotational speeds of the motor X4 and the agitating rotors X1 to certain target values or within target ranges being set.

Furthermore, the controller 0 constantly monitors magnitude of load torque applied to the agitating rotors Z44 configured to agitate a powdery material in the powdery material mixing and feeding device Z accompanying the molding machine A, particularly the motor Z43 configured to drive the screw Z42 of the horizontal mixer Z4. The load torque applied to the motor Z43 may be measured by a torque sensor (torque meter) attached to the motor Z43, or may be estimated from magnitude of current applied to the motor Z43 in order to adjust rotational speeds of the motor Z43, the screw Z42, and the agitating rotors Z44 to certain target values or within target ranges being set.

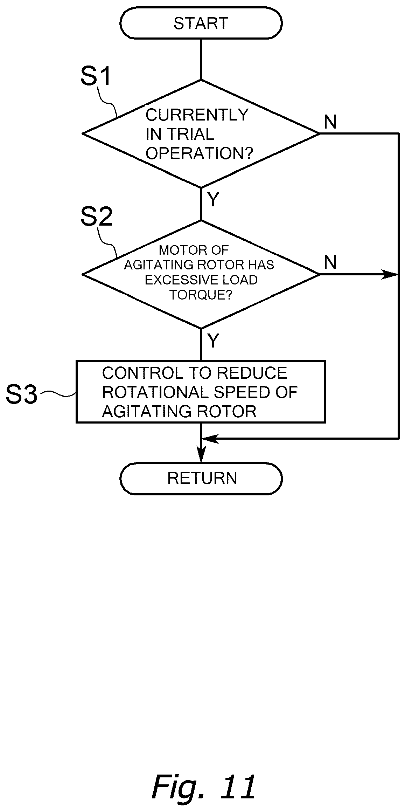

In this configuration, as shown in Fig. 11, during trial operation of producing molded products at reduced rotational speed of the turret 3 in the molding machine A in comparison to normal operation for mass production of molded products (step S1), under a condition where the load torque (or an existing amount of applied current) of the motor X4 configured to drive the agitating rotors X1 of the agitated feeder X is excessive beyond an upper limit of a predetermined range and/or the load torque (or an existing amount of applied current) of the motor Z43 configured to drive the agitating rotors Z44 of the powdery material mixing and feeding device Z (horizontal mixer Z4) is excessive beyond an upper limit of a predetermined range (step S2), the controller 0 temporarily reduces the rotational speeds of the motor X4 and the agitating rotors X1 of the feeder X and/or reduces the rotational speeds of the motor Z43 and the agitating rotors Z44 of the powdery material mixing and feeding device Z (horizontal mixer Z4) (step S3).

During trial operation, the fact that the load torque (or the existing amount of applied current) of the motor X4 configured to drive the agitating rotors X1 of the agitated feeder X is excessive beyond a predetermined value means that mixed powdery materials containing the lubricant is staying in the feeder X. In addition, mixed powdery materials may stay also in the powdery material mixing and feeding device Z (and also the horizontal mixer Z4) disposed upstream of and coupled to the feeder X. The same applies to the fact that the load torque (or the existing amount of applied current) of the motor Z43 configured to drive the agitating rotors Z44 of the horizontal mixer Z4 as an element of the powdery material mixing and feeding device Z is excessive beyond a predetermined value.

If the condition in step S2 is established, the controller 0 of the molding machine A executes control in step S3 assuming that an excessive amount of powdery materials are currently staying in the feeder X or the powdery material mixing and feeding device Z (horizontal mixer Z4). This reduces the number of agitation of the mixed powdery materials staying in the feeder X and/or the powdery material mixing and feeding device Z (horizontal mixer Z4). This avoids excessive agitation and kneading of an internal lubricant added to mixed powdery materials during trial operation of the molding machine A, to optimize quality of molded products produced during trial operation. This will lead to appropriate setting of tableting conditions of normal operation for mass production of molded products.

The invention is not limited to the embodiment detailed above. Specific configurations of the respective portions can be modified in various manners within the scope of the invention defined by the claims.

## Claims

1. A compression molding machine (A) comprising a turret (3) including a die table (31) having die bores (4) penetrating the die table (31), an upper punch (5) and a lower punch (6) slidably retained above and below each of the die bores (4), the compression molding machine (A) being of a rotary type configured to horizontally rotate the turret (3), fill the die bore (4) passing below a feeder (X) with a powdery material containing a lubricant from the feeder (X), and compression mold the powdery material filled in the die bore (4) when the upper punch (5) and the lower punch (6) being paired pass between an upper roll (12, 14) and a lower roll (13, 15) to produce a molded product, wherein
the feeder (X) includes an agitating rotor (X1) configured to agitate the powdery material therein, and
the compression molding machine (A) is configured such that, during trial operation of producing molded products at reduced rotational speed of the turret (3) in comparison to normal operation for mass production of molded products, the compression molding machine (A) measures load torque of a motor (X4) configured to drive to rotate the agitating rotor (X1) in the feeder (X) or current flowing in a coil of the motor (X4), and controls to reduce rotational speed of the agitating rotor (X1) in the feeder (X) if the load torque or the current is large beyond a predetermined value.

2. A compression molding machine (A) comprising a turret (3) including a die table (31) having die bores (4) penetrating the die table (31), an upper punch (5) and a lower punch (6) slidably retained above and below each of the die bores (4), the compression molding machine (A) being of a rotary type configured to horizontally rotate the turret (3), fill the die bore (4) passing below a feeder (X) with a powdery material containing a lubricant from the feeder (X), and compression mold the powdery material filled in the die bore (4) when the upper punch (5) and the lower punch (6) being paired pass between an upper roll (12, 14) and a lower roll (13, 15) to produce a molded product, wherein
the compression molding machine (A) is accompanied by a powdery material mixing and feeding device (Z) including an agitating rotor (Z44) configured to agitate the powdery material mixed with the lubricant and simultaneously feeding the feeder (X) with the powdery material thus mixed, and
the compression molding machine (A) is configured such that, during trial operation of producing molded products at reduced rotational speed of the turret (3) in comparison to normal operation for mass production of molded products, the compression molding machine (A) measures load torque of a motor configured to drive to rotate the agitating rotor (Z44) of the powdery material mixing and feeding device (Z) or current flowing in a coil of the motor, and controls to reduce rotational speed of the agitating rotor (Z44) of the powdery material mixing and feeding device (Z) if the load torque or the current is large beyond a predetermined value.

3. A compression molding machine (A) comprising a turret (3) including a die table (31) having die bores (4) penetrating the die table (31), an upper punch (5) and a lower punch (6) slidably retained above and below each of the die bores (4), the compression molding machine (A) being of a rotary type configured to horizontally rotate the turret (3), fill the die bore (4) passing below a feeder (X) with a powdery material containing a lubricant from the feeder (X), and compression mold the powdery material filled in the die bore (4) when the upper punch (5) and the lower punch (6) being paired pass between an upper roll (12, 14) and a lower roll (13, 15) to produce a molded product, wherein
the compression molding machine (A) is accompanied by a powdery material mixing and feeding device (Z) including an agitating rotor (Z44) configured to agitate the powdery material mixed with the lubricant and simultaneously feeding the feeder (X) with the powdery material thus mixed,
the feeder (X) includes an agitating rotor (X1) configured to agitate the powdery material therein, and
the compression molding machine (A) is configured such that, during trial operation of producing molded products at reduced rotational speed of the turret (3) in comparison to normal operation for mass production of molded products, the compression molding machine (A) measures load torque of a motor configured to drive to rotate the agitating rotor (Z44) of the powdery material mixing and feeding device (Z) or current flowing in a coil of the motor, and controls to reduce rotational speed of the agitating rotor (X1) in the feeder (X) if the load torque or the current is large beyond a predetermined value.

4. A compression molding machine (A) comprising a turret (3) including a die table (31) having die bores (4) penetrating the die table (31), an upper punch (5) and a lower punch (6) slidably retained above and below each of the die bores (4), the compression molding machine (A) being of a rotary type configured to horizontally rotate the turret (3), fill the die bore (4) passing below a feeder (X) with a powdery material containing a lubricant from the feeder (X), and compression mold the powdery material filled in the die bore (4) when the upper punch (5) and the lower punch (6) being paired pass between an upper roll (12, 14) and a lower roll (13, 15) to produce a molded product, wherein
the compression molding machine (A) is accompanied by a powdery material mixing and feeding device (Z) including an agitating rotor (Z44) configured to agitate the powdery material mixed with the lubricant and simultaneously feeding the feeder (X) with the powdery material thus mixed,
the feeder includes an agitating rotor (X1) configured to agitate the powdery material therein, and
the compression molding machine (A) is configured such that, during trial operation of producing molded products at reduced rotational speed of the turret (3) in comparison to normal operation for mass production of molded products, the compression molding machine (A) measures load torque of a motor (X4) configured to drive to rotate the agitating rotor (X1) in the feeder (X) or current flowing in a coil of the motor (X4), and controls to reduce rotational speed of the agitating rotor (Z44) of the powdery material mixing and feeding device (Z) if the load torque or the current is large beyond a predetermined value.
